(19) Europäisches Patentamt
European Patent Office
Office européen des brevets

(11) **EP 3 212 396 B1**

(12) **EUROPEAN PATENT SPECIFICATION**

(45) Date of publication and mention
of the grant of the patent:
**01.12.2021  Bulletin 2021/48**

(51) Int Cl.:
***B32B 27/08*** *(2006.01)*    ***B32B 27/32*** *(2006.01)*
***B65D 1/02*** *(2006.01)*    ***B65D 23/02*** *(2006.01)*

(21) Application number: **15750529.8**

(22) Date of filing: **29.07.2015**

(86) International application number:
**PCT/US2015/042602**

(87) International publication number:
**WO 2016/069075 (06.05.2016 Gazette 2016/18)**

(54) **BLOW MOLDED MULTILAYER CONTAINERS HAVING REDUCED PRODUCT RETENTION**

MEHRSCHICHTIGE BLASGEFORMTE BEHÄLTER MIT REDUZIERTER PRODUKTRETENTION

RÉCIPIENTS MULTICOUCHES MOULÉS PAR SOUFFLAGE AYANT UNE RETENUE DE PRODUIT RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **31.10.2014   US 201462073134 P**

(43) Date of publication of application:
**06.09.2017   Bulletin 2017/36**

(73) Proprietor: **Dow Global Technologies LLC**
**Midland, MI 48674 (US)**

(72) Inventors:
• **KALIHARI, Vivek**
**Midland, MI 48672 (US)**
• **MARTIN, Jill, M.**
**Pearland, TX 77584 (US)**
• **KIM, Hyunwoo**
**Midland, MI 48640 (US)**
• **WOODWARD, Meaghan, M.**
**Midland, MI 48640 (US)**
• **SAVARGAONKAR, Nilesh, R.**
**Marietta, GA 30067 (US)**
• **READ, Michael, D.**
**Midland, MI 48642 (US)**
• **SERRAT, Cristina**
**Sugar Land, TX 77479 (US)**
• **BAFNA, Ayush, A.**
**Manvel, TX 77578 (US)**

(74) Representative: **Boult Wade Tennant LLP**
**Salisbury Square House**
**8 Salisbury Square**
**London EC4Y 8AP (GB)**

(56) References cited:
**EP-A1- 1 270 671**    **EP-A1- 2 123 571**
**WO-A1-2014/010534**    **WO-A1-2014/105608**
**WO-A2-2009/051993**    **US-A1- 2004 043 239**

• **Graham H Edward: "Crystallinity of Linear Low Density Polyethylene and of Blends with High Density Polyethylene", British Polymer Journal, 1 March 1986 (1986-03-01), pages 88-93, XP055221598, DOI: 10.1002/pi.4980180207 Retrieved from the Internet: URL:http://onlinelibrary.wiley.com/store/1 0.1002/pi.4980180207/asset/4980180207_ftp. pdf?v=1&t=iftmkkn4&s=16692586dc3a8b65647c 1 aebe95e361bd775dad9 [retrieved on 2015-10-16]**
• **None**

## Description

### Field of Invention

The disclosure relates to blow molded containers.

### Background of the Invention

WO-A-2014/010534 discloses a packing container filled with a content. Wherein at least part of a surface that comes in contact with said contact with said content is a liquid-permeable surface which holds a liquid different from said content.

Product retention in packaging in various applications such as personal care, food, beverage and household products results in product waste and lessens consumer value. Improved product release can result in less product waste as well as container waste. Furthermore, improved product release characteristics could reduce recycling costs where retained product must be removed prior to recycling. In addition, improved product release characteristics would give product manufacturers more formulation flexibility, allowing them to introduce more viscous and/or higher solids products. A container for holding such products would be desirable for both consumers and product manufacturers.

### Summary of the Invention

The disclosure is for blow molded containers.

In one embodiment, the disclosure provides a container blow molded from a multilayer structure which comprises an inner product facing layer which comprises an ethylene-based polymer having a density equal to or less than 0.940 g/cc, a crystallinity of equal to or less than 62%, and $Mz/Mn$ ratio equal to or less than 100, wherein the inner product facing layer has a small scale root mean square roughness of equal to or less than 40.

### Detailed Description of the Invention

The disclosure provides blow molded containers.

In a first aspect, the invention provides a container blow molded from a multilayer structure which comprises an inner product facing layer which comprises an ethylene-based polymer having a density equal to or less than 0.940 g/cc, a crystallinity of equal to or less than 62%, and $Mz/Mn$ ratio equal to or less than 100, wherein the inner product facing layer has a small scale root mean square roughness of equal to or less than 40 nm.

As used herein, the term "multilayer structure" means any structure having more than one layer. For example, the multilayer structure may have two, three, four, five or more layers.

As used herein, the term "ethylene-based polymer" means a polymer having greater than 50 percent by weight (wt%) units derived from ethylene monomer.

As used herein, the term "inner product facing layer" means the layer which is in contact with product in the container, when the multilayer structure is formed into a container and filled with product.

As used herein, the term "small scale root mean square roughness" refers to the root mean square roughness measured by atomic force microscopy using a sample size of 25 square microns.

As used herein, the term "large scale root mean square roughness" refers to the root mean square roughness measured using laser scanning microscopy on a sample size of 372240 square microns.

The inner product facing layer comprises an ethylene-based polymer having a density equal to or less than 0.940 g/cc. All individual values and subranges from equal to or less than 0.940 g/cc are included and disclosed herein. For example, the density of the ethylene-based polymer may be equal to or less than 0.940 g/cc, or in the alternative, equal to or less than 0.935 g/cc, or in the alternative, equal to or less than 0.930 g/cc, or in the alternative, equal to or less than 0.925 g/cc, or in the alternative, equal to or less than 0.920 g/cc. In a particular embodiment, the density of the ethylene-based polymer is equal to or greater than 0.860 g/cc. All individual values and subranges from equal to or greater than 0.860 g/cc are included and disclosed herein. For example, the density of the ethylene-based polymer may be equal to or greater than 0.860 g/cc, or in the alternative, equal to or greater than 0.865 g/cc, or in the alternative, equal to or greater than 0.870 g/cc, or in the alternative, equal to or greater than 0.875 g/cc, or in the alternative, equal to or greater than 0.870 g/cc. In a particular embodiment, the ethylene-based polymer has a density from 0.915 to 0.930 g/cc.

The inner product facing layer comprises an ethylene-based polymer having a crystallinity equal to or less than 62%. All individual values and subranges from equal to or less than 62% are included and disclosed herein. For example, the ethylene-based polymer crystallinity may be equal to or less than 62%, or in the alternative, equal to or less than 56%, or in the alternative, equal to or less than 50%, or in the alternative, equal to or less than 45%.

The inner product facing layer comprises an ethylene-based polymer having a Mz/Mn ratio equal to or less than 100. All individual values and subranges from equal to or less than 100 are included and disclosed herein. For example, the Mz/Mn ratio can be equal to or less than 100, or in the alternative, equal to or less than 75, or in the alternative, equal to or less than 50, or in the alternative, equal to or less than 40, or in the alternative, equal to or less than 30, or in the alternative, equal to or less than 25, or in the alternative, equal to or less than 20. In a particular embodiment, the ethylene-based polymer has a Mz/Mn ratio greater than or equal to 1. All individual values and subranges from equal to or greater than 1 are included and disclosed herein. For example, the Mz/Mn ratio can be equal to or greater than 1, or in the alternative, equal to or greater than 1.5, or in the alternative, equal to or greater than 1.8, or in the alternative, equal to or greater than 2, or in the alternative, equal to or greater than 2.5. In one embodiment, the Mz/Mn ratio is from 1.8 to 20.

In a particular embodiment, the inner product facing layer comprises an ethylene-based polymer having a ratio of viscosity at 0.1 rad/s, 190 C to viscosity at 100 rad/s at 190 C ("viscosity ratio (0.1/100)") of equal to or less than 20. All individual values and subranges from equal to or less than 20 are included and disclosed herein. For example, the viscosity ratio (0.1/100) can have an upper limit of 20, or in the alternative, an upper limit of 15, or in the alternative, an upper limit of 10, or in the alternative, an upper limit of 8. In another embodiment, the viscosity ratio (0.1/100) has a lower limit of 1, or in the alternative, a lower limit of 1.5, or in the alternative, a lower limit of 2, or in the alternative, a lower limit of 2.5.

In a particular embodiment, the inner product facing layer which comprises from 60 to 100 percent by weight (wt%) of the ethylene-based polymer. All individual values and subranges from 60 to 100 wt%, are included and disclosed herein; for example, the wt% of the ethylene-based polymer in the inner product facing layer can range from a lower limit of 60, 65, 70, 75, 80, 85, 90 or 95 wt% to an upper limit of 85, 90, 95 or 100 wt%. For example, the inner product facing layer may comprises from 80 to 100 wt% ethylene-based polymer, or in the alternative, from 80 to 90 wt% ethylene-based polymer, or in the alternative, from 90 to 100 wt% ethylene-based polymer, or in the alternative, from 85 to 95 wt% ethylene-based polymer.

Exemplary ethylene-based polymers for use in the inner product facing layer include DOWLEX, ELITE and ENGAGE, all of which are commercially available from The Dow Chemical Company (Midland, MI, USA) and EXCEED, which is commercially available from ExxonMobil Chemical Corporation (Baytown, TX, USA).

In one embodiment the inner product facing layer comprises from 0 to 20 wt% of one or more low density polyethylene polymers (LLDPE or LDPE or VLDPE). All individual values and subranges from 0 to 20 wt% are included and disclosed herein. For example, the amount of LLDPE can range from a lower limit of 0, 5, or 15 wt% to an upper limit of 5, 10, 15 or 20 wt%. For example, the amount of LLDPE in the inner product facing layer may range from 0 to 20 wt%, or in the alternative, from 0 to 10 wt%, or in the alternative, from 10 to 20 wt%, or in the alternative, from 5 to 15 wt%. Any LLDPE, such as described in U.S. Patents 5,272,236 and 5,278,272.

In some embodiments, the inner product facing layer has a small scale root means square roughness of equal to or less than 40 nm. All individual values and subranges from equal to or less than 40 nm are included and disclosed herein. For example, the small scale surface roughness can be equal to or less than 40 nm, or in the alternative, equal to or less than 35 nm, or in the alternative, equal to or less than 30 nm, or in the alternative, equal to or less than 25 nm. In a particular embodiment, the small scale root mean square roughness is equal to or greater than 1 nm. All individual values and subranges from equal to or greater than 1 nm are included and disclosed herein. For example, the small scale root mean square roughness may be equal to or greater than 1 nm, or in the alternative, equal to or greater than 5 nm, or in the alternative, equal to or greater than 10 nm, or in the alternative, equal to or greater than 15 nm.

The disclosure further provides the container according to any embodiment disclosed herein except that the inner product facing layer is co-extruded with an olefin-based polymer outer layer formed from a first olefin-based polymer having a density greater than 0.950 g/cc. All individual values and subranges greater than 0.950 g/cc are disclosed and included herein. For example, the first olefin-based polymer of the outer layer can have a density greater than 0.950 g/cc or in the alternative, greater than 0.960 g/cc or in the alternative, greater than 0.965 g/cc or in the alternative, greater than 0.970 g/cc. In a particular embodiment, the density of the first olefin-based polymer has an upper limit of 0.980 g/cc, or in the alternative, 0.975 g/cc, or in the alternative, 0.970 g/cc.

The disclosure further provides the container according to any embodiment disclosed herein except that the inner product facing layer is co-extruded with an olefin-based polymer core layer formed from a second olefin-based polymer having a density greater than 0.950 g/cc, wherein the core layer is adjacent to the inner product facing layer. All individual values and subranges greater than 0.950 g/cc are disclosed and included herein. For example, the second olefin-based polymer of the outer layer can have a density greater than 0.950 g/cc or in the alternative, greater than 0.960 g/cc or in the alternative, greater than 0.965 g/cc or in the alternative, greater than 0.970 g/cc. In a particular embodiment, the density of the second olefin-based polymer has an upper limit of 0.980 g/cc, or in the alternative, 0.975 g/cc, or in the alternative, 0.970 g/cc.

The container may be made from the multilayer structure according to any appropriate process, such as blow molding, coextrusion, continuous blow molding, reciprocating blow molding, accumulator blow molding, sequential blow molding, injection blow molding, injection stretch blow molding, thermoforming and lamination.

The disclosure further includes the container according to any embodiment disclosed herein, except that the thickness of the inner product facing layer is from 5 to 50% of the total thickness of the multilayer structure. All individual values and subranges from 5 to 50 % are included and disclosed herein; for example the thickness of the inner product facing layer can range from a lower limit of 5, 15, 30, or 45 % of the total thickness of multilayer structure to an upper limit of 10, 20, 35 or 50 % of the total thickness of multilayer structure. For example, the thickness of the inner product facing layer may be from 5 to 50% of the total multilayer structure thickness, or in the alternative, from 5 to 30%, or in the alternative, from 25 to 50%, or in the alternative, from 15 to 45%. The percentage thickness of the container contributed by the inner product facing layer is a function of, inter alia, the intended use of the container and the product to be contained.

In a further aspect, the disclosure further provides a container blow molded from a multilayer structure which comprises an inner product facing layer which comprises an ethylene-based polymer having a density equal to or less than 0.940 g/cc, a crystallinity of equal to or less than 62%, and viscosity ratio (0.1/100) equal to or less than 20; wherein the inner product facing layer has a small scale root mean square roughness of equal to or less than 40 nm.

The disclosure further includes the container according to any embodiment disclosed herein, except that the container exhibits less product retention than a comparative container of the same size and shape as the container, wherein the comparative container does not include the inner product facing layer. One of skill in the art would understand that the final amount of product retention will depend upon certain characteristics of the product, such as yield stress or viscosity. In a particular embodiment, the container has an improvement in product retention compared to the comparative container of at least 30%, i.e., the inventive container retains at least 30% less product than that retained by the comparative container. All individual values and subranges from at least 30% are included and disclosed herein. For example, the improvement in product retention over that of a comparative container may be at least 30%, or in the alternative, at least 40%, or in the alternative, at least 50%, or in the alternative, at least 70%.

## Examples

The following examples illustrate the present invention but are not intended to limit the scope of the invention.

## Container Production

Coextruded blow molded bottles were produced on a BEKUM BM-502S commercial blow molding line. BEKUM BM-502S can coextrude three-layer A/B/C blow molded structure (A= inner product facing layer, B= core layer and C= outer layer). A BM-502S is composed of two 38 mm diameter single-screw extruders for outer and inner skin materials and one 60 mm diameter single-screw extruder for a core layer. It has a multi-manifold coextrusion blow molding head where individual layers are formed separately and merged together before the exit of annular die. In typical condition, materials were extruded at 6.8 kg/h at 188 °C into a tubular parison through a converging die tool with an annular opening between a die bushing, Ø 17.8 mm × 20° and a die pin (Ø 14.0 mm × 15°). Extruded parisons were blow molded with pressurized air at 4.1 bar for 13 s into 0.89 mm thick wall, 19.9 cm tall, Ø 5.9 cm, 414 ml Boston Round bottles. Core layer B and outer layer C were kept constant (bimodal high density PE, PE-13, density: 0.958 g/cc, melt index: 0.28 dg/min at 190 °C/2.16 kg) whereas the inner product facing layer (layer A, 10% of overall wall thickness) was variable in order to study the effect of inner layer polymer on the release behavior of personal care products. The inner product facing layer resins used in the Inventive Examples (IE) and the Comparative Examples (CE) as well as certain properties are listed in Tables 1 and 2. Their density ranges from 0.87 to 0.96 g/cc. Their melt indices are all around 0.3-1.0 dg/min for good melt viscosity match with PE-13 resin to prevent layer instability in the coextruded structure. To evaluate the inner layer thickness dependence of the product release, the inner layer A thickness was varied between 5 and 20% of the overall bottle wall thickness. Also as a control, monolayer bottles of 10/90 PE-4/PE-13 blends were produced at the same processing condition and their product release was compared with the multilayer bottles with the same composition (10% PE-4 inner layer on 90% PE-13).

**Table 1**

| | Polymer used in inner product facing layer | Density g/cc | Crystallinity % | Mw daltons | Mw/Mn | Mz daltons | Mz/Mn |
|---|---|---|---|---|---|---|---|
| **CE-1** | PE-1 (gas phase, dual reactor) | 0.958 | 74.1 | 171800 | 19.9 | 826300 | 95.7 |

(continued)

|  | Polymer used in inner product facing layer | Density g/cc | Crystallinity % | Mw daltons | Mw/Mn | Mz daltons | Mz/Mn |
|---|---|---|---|---|---|---|---|
| IE-1 | PE-2 (solution, Ziegler/Natta catalyst) | 0.935 | 59.0 | 116600 | 3.9 | 332800 | 11.1 |
| IE-2 | PE-3 (solution, Ziegler/Natta catalyst) | 0.92 | 48.7 | 113800 | 4.3 | 364100 | 13.6 |
| IE-3 | PE-4 (solution, Ziegler/Natta catalyst) | 0.919 | 48.0 | 121947 | 3.8 | 375866 | 11.7 |
| IE-4 | PE-5 (solution, dual reactor) | 0.92 | 48.7 | 113600 | 3.6 | 255600 | 8.0 |
| CE-2 | PE-6 (solution, dual reactor) | 0.94 | 62.4 | 109380 | 6.1 | 319770 | 17.7 |
| CE-3 | PE-7 (solution, dual reactor) | 0.96 | 75.4 | 101000 | 5.3 | 259400 | 13.7 |
| IE-5 | PE-8 (solution, single site catalyst) | 0.887 | 24.9 | 105708 | 2.0 | 181137 | 3.5 |
| IE-6 | PE-9 (gas phase, Metallocene catalyst) | 0.918 | 47.3 | 104612 | 2.7 | 196507 | 5.0 |
| IE-8 | PE-12 (solution, Ziegler/Natta catalyst) | 0.917 | 46.6 | 95300 | 4.1 | 285400 | 12.2 |
| CE-4 | PE-11 (gas, chromium catalyst) | 0.92 | 48.7 | 135800 | 16.7 | 1185310 | 145.9 |
| CE-5 | PE-13 (gas phase, dual reactor, with processing aid) | 0.958 | 74.1 | 171800 | 19.9 | 826300 | 95.7 |

**Table 2**

|  | Polymer used in inner product facing layer | Viscosity (0.1 rad/s 190C) Pa-s | Viscosity (100 rad/s 190C) Pa-s | Viscosity (0.1/100) rad/s ratio |
|---|---|---|---|---|
| CE-1 | PE-1 | 35586 | 1671 | 21.3 |
| IE-1 | PE-2 | 8712 | 1688 | 5.2 |
| IE-2 | PE-3 | 8939 | 1657 | 5.4 |
| IE-3 | PE-4 | 9536 | 1713 | 5.6 |
| IE-4 | PE-5 | 11580 | 1634 | 7.1 |
| CE-2 | PE-6 | 17674 | 1227 | 14.4 |
| CE-3 | PE-7 | 17812 | 1328 | 13.4 |
| IE-5 | PE-8 | 10119 | 1737 | 5.8 |

(continued)

|  | Polymer used in inner product facing layer | Viscosity (0.1 rad/s 190C) Pa-s | Viscosity (100 rad/s 190C) Pa-s | Viscosity (0.1/100) rad/s ratio |
|---|---|---|---|---|
| IE-6 | PE-9 | 6867 | 2457 | 2.8 |
| IE-7 | PE-10 | 11055 | 1580 | 7.0 |
| CE-4 | PE-11 | 22542 | 1026 | 22.0 |
| IE-8 | PE-12 | 3750 | 1250 | 3.0 |

Coextruded structures of 10% PE-4 inner layer on 90% PE-13 showed significantly lower retention of DOVE Body Wash (4.0 ± 0.6 percent retention) than the monolayer bottles of 10/90 PE-4/PE-13 blends (9.4 ± 1.1 percent retention) after 24 h squeeze and shake tests. Table 3 provides the product retention percentage using DOVE Body Wash.

**Table 3**

| Example | Inner layer Polymer | Roughness Sq (nm) | Wt Retention (%) |
|---|---|---|---|
| CE-5 | PE-13 | 57.2 ± 17.2 | 12.4 ± 1.7 |
| CE-1 | PE-1 | 54.8 ± 1.9 | 9.3 ± 1.9 |
| CE-3 | PE-7 | 38.9 ± 4.5 | 12.8 ± 1.4 |
| CE-2 | PE-6 | 27.4 ± 1.7 | 6.5 ± 2.2 |
| IE-1 | PE-2 | 19.5 ± 3.1 | 5.6 ± 2.0 |
| IE-2 | PE-3 | 15.1 ± 4.0 | 4.6 ± 1.6 |
| IE-4 | PE-5 | 10.5 ± 0.7 | 5.2 ± 2.6 |
| IE-3 | PE-4 | 10.3 ± 1.6 | 4.0 ± 0.6 |
| IE-6 | PE-9 | 12.1 ± 2.9 | 5.1 ± 1.1 |
| IE-5 | PE-8 | 4.5 ± 0.3 | 5.3 ± 0.8 |
| CE-4 | PE-11 | 23.1 ± 4.9 | 7.6 ± 1.2 |
| IE-8 | PE-12 | 10.6 ± 1.5 | 3.7 ± 0.6 |

### Test Methods

Test methods include the following:

Polymer density was measured according to ASTM D792.
Polymer crystallinity: Differential Scanning Calorimetry (DSC) can be used to measure the melting and crystallization behavior of a polymer over a wide range of temperature. For example, the TA Instruments Q1000 DSC, equipped with an RCS (refrigerated cooling system) and an autosampler is used to perform this analysis. During testing, a nitrogen purge gas flow of 50 ml/min is used. Each sample is melt pressed into a thin film at about 175 °C; the melted sample is then air-cooled to room temperature (~25 °C). A 3-10 mg, 6 mm diameter specimen is extracted from the cooled polymer, weighed, placed in a light aluminum pan (ca 50 mg), and crimped shut. Analysis is then performed to determine its thermal properties.

The thermal behavior of the sample is determined by ramping the sample temperature up and down to create a heat flow versus temperature profile. First, the sample is rapidly heated to 180 °C and held isothermal for 3 minutes in order to remove its thermal history. Next, the sample is cooled to -40 °C at a 10 °C/minute cooling rate and held isothermal at -40 °C for 3 minutes. The sample is then heated to 150 °C (this is the "second heat" ramp) at a 10 °C/minute heating rate. The cooling and second heating curves are recorded. The cool curve is analyzed by setting baseline endpoints from the beginning of crystallization to -20 °C. The heat curve is analyzed by setting baseline endpoints from -20 °C to the end of melt. The values determined are peak melting temperature ($T_m$), peak crystallization temperature

($T_c$), heat of fusion ($H_f$) (in Joules per gram), and the calculated % crystallinity for polyethylene samples using the equation shown below:

$$\% \text{ Crystallinity} = ((H_f)/(292 \text{ J/g})) \times 100$$

The heat of fusion ($H_f$) and the peak melting temperature are reported from the second heat curve. Peak crystallization temperature is determined from the cooling curve.

Molecular weights, Mw, Mz, and Mn were measured by GPC. A high temperature chromatographic system used is a Waters 150C (Millford, MA) or Polymer Laboratories (Shropshire, UK) PL-220 was used to perform the GPC chromatography. Data collection is performed using Viscotek (Houston, TX) Data Manager. Data calculations are performed using or in the same manner of Viscotek TriSEC Software Version 3. The system is equipped with an on-line solvent degas device. Injection temperature and oven temperature were controlled at 150 degrees Celsius. The columns used are 3 10-micron "Mixed-B" columns and a corresponding pre-column from Polymer Laboratories. The solvent used is 1, 2, 4 trichlorobenzene. The samples are prepared at a concentration of 0.1 grams of polymer in 50 milliliters of solvent. The chromatographic solvent and the sample preparation solvent contain 200 ppm of butylated hydroxytoluene (BHT). Both solvent sources are nitrogen sparged. Polyethylene samples are stirred gently at 160 degrees Celsius for 3 hours. The injection volume used is 200 microliters and the flow rate is 1 milliliters/minute.

Calibration of the GPC column set is performed with 21 narrow molecular weight distribution polystyrene standards with molecular weights ranging from 580 to 8,400,000 and are arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80 degrees Celsius with gentle agitation for 30 minutes. The narrow standards mixtures are run first and in order of decreasing highest molecular weight component to minimize degradation. The polystyrene standard peak molecular weights are converted to polyethylene molecular weights using the Equation 1 (as described in Williams and Ward, J. Polym. Sci., Polym. Let., 6, 621 (1968)):

$$\text{Mpolyethylene} = A \times (\text{Mpolystyrene})^B \qquad (1)$$

where M is the molecular weight, A has a value of approximately 0.4316 and B is equal to 1.0. An acceptable weight-average molecular weight on such a system for NBS 1475A (NIST) linear polyethylene is approximately 52,000.

In the chromatography, decane is used as a flow rate marker for both the calibrants and samples, allowing traceability back to the narrow standards calibration. Relative flow rate marker correction should be 1% or under. Column plate count is measured by injecting eicosane and column plate count should exceed 24,000 plates.

The Mn, Mw, and Mz are calculated according to Equations 2(a), 2(b), and 2(c):

$$Mn = \frac{\sum_i c_i}{\sum_i {c_i}/{M_i}} \qquad 2(a)$$

$$Mw = \frac{\sum_i c_i M_i}{\sum_i c_i} \qquad 2(b)$$

$$Mz = \frac{\sum_i c_i M_i^2}{\sum_i c_i M_i} \qquad 2(c)$$

where $c_i$ is represented by the baseline subtracted refractive index signal at each chromatographic data point within the integration window for each respective sample and $M_i$ is the polyethylene-equivalent molecular weight corresponding to that chromatographic slice as calculated from Equation 1. An on-line LALLS detector may be used for guidance on setting the integration boundary for the earliest eluting (highest molecular weight material) for the refractometer.

Dynamic oscillatory shear tests in the linear viscoelastic regime were performed for polymer samples at 190°C in a frequency range from 0.1 to 100 rad/s on stainless steel parallel plates of 25 mm diameter. The instrument used was ARES by TA Instruments.

The complex viscosity ($\eta^*$) was obtained at 10% of strain. Disk shaped samples of either 2 or 3.3 mm thickness were squeezed between the plates and then trimmed prior to each test. Samples of 2 mm thickness were squeezed and trimmed in one step to a test gap 1.8 mm, whereas samples of 3.3 mm were squeezed and trimmed in two steps to a test gap of 2mm. In the first step the melt sample was squeezed to 3 mm gap and trimmed. In the second step and after reaching steady state temperature, the sample was squeezed to 2 mm gap and trimmed. Note the ASTM method D4440 defines a good operating test gap in the range from 1 to 3mm for parallel plate geometry. The "delay before test" option was enabled in the software and set to 5 min to allow the temperature in the oven to equilibrate before the beginning of the test. All the measurements were performed under nitrogen atmosphere.

Optimized bottle test for Body Wash release measurements were conducted as follows:

1) Weight the empty bottle without cap, to get a tare weight.

2) It is desirable to have at least four replicates of each bottle type to be tested, in order to get a representative average

3) Fill the blow molded bottle to ~70% of its volume capacity.

4) Cap the bottle tightly.

5) Invert the bottle and rest it on its cap. Time t = 0

6) Record the time and wait 24 +/- 1 hour.

7) At 24 +/- 1 hour, take the cap off the bottle and squeeze it until 50% of product is dispensed. Record the weight of the bottle + remaining body wash at this point. t=24H

8) Recap the bottle and place it in the inverted position, for 4 hours.

9) At 4 hours after half emptying (t=28H), again uncap the bottle. Squeeze, but do not shake, the bottle repeatedly until 3 successive squeezes do not remove any material. Record the weight of the bottle + remaining body wash again.

10) Recap and allow the bottle to sit for an additional 20 hours in the inverted position, for a total of 24 hours since the first emptying, and 48 hours since filling.

11) At 24 hours, the bottle will be both shook and squeezed to remove as much remaining material as possible. Alternate between a three shakes and a squeeze. Repeat this cycle until 3 successive shakes and a squeeze do not remove any material. t=48H

12) Record the final weight of the bottle + body wash,

Surface roughness was measured by either atomic force microscopy (AFM) or confocal laser scanning microscopy (CLSM).

AFM: Samples were mounted onto a glass slide using double-sided tape. Four areas were analyzed on each sample. PeakForce tapping mode was obtained on a Dimension Icon (Bruker) using a Nanoscope V controller (software v 8.10b47). A ScanAsyst Air probe was used for all images (resonant frequency: 70 kHz; spring constant: 0.4 N/m, Bruker). All images were obtained with an setpoint of 0.05 V and a peak force engage setpoint of 0.15 V. Images were collected over a 5 $\mu$m $\times$ 5 $\mu$m area with 1024 $\times$ 1024 resolution at a scan rate of 0.48 Hz.

Images were post-processed using SPIP v.5.1.11 (Image Metrology). An average profile fit with a LMS Fit Degree of zero was applied to all images. Noise was removed with a Median_3x3_1_HighandLow_Circle filter. Surface roughness was averaged over four areas on each sample and reported for Sq (root mean square). The average value is reported.

CLSM: All samples were analyzed as received over five areas. CLSM was obtained with a Keyence VK-9700 microscope (application viewer VK-H1V1E) with a 20x objective lens and superfine resolution. All areas analyzed were 705 $\mu$m $\times$ 528 $\mu$m.

All images were post-processed and analyzed using VK Analyzer Plus v.2.4.0.0 (Keyence). Images were plane fit and flattened using a tilt correction function, and noise was removed by a normal height cut level filter. Surface roughness measurements were calculated across all height images for each sample and averaged together using SPIP v.5.1.11 (Image Metrology) and reported in Sq (root mean square). Prior to analysis, images were plane flattened with the z-offset mean set to zero.

## Claims

1. A container blow molded from a multilayer structure which comprises:

an inner product facing layer which comprises an ethylene-based polymer having a density equal to or less than 0.940 g/cc, measured according to ASTM D792, a crystallinity of equal to or less than 62% measured with a method as described herein , and Mz/Mn ratio equal to or less than 100 measured with a method as described herein

wherein the inner product facing layer has a small scale root mean square roughness of equal to or less than 40 nm, measured with a method as described herein.

2. The container according to claim 1, wherein the inner product facing layer has a small scale root mean square roughness of equal to or less than 30 nm.

3. The container according to any one of the preceding claims wherein the inner product facing layer has a small scale root mean square roughness of equal to or less than 25 nm.

4. The container according to any one of the preceding claims, wherein the ethylene-based polymer has a density of equal to or less than 0.930 g/cc.

5. The container according to any one of the preceding claims, wherein the ethylene-based polymer has a density from 0.915 to 0.930 g/cc.

6. The container according to any one of the preceding claims wherein the ethylene-based polymer has a crystallinity of equal to or less than 56%.

7. The container according to any one of the preceding claims wherein the inner product facing layer is co-extruded with an olefin-based polymer outer layer formed from an olefin-based polymer having a density greater than 0.950 g/cc.

8. The container according to any one of the preceding claims wherein the inner product facing layer is co-extruded with an olefin-based polymer core layer formed from an olefin-based polymer having a density greater than 0.950 g/cc, wherein the core layer is adjacent to the inner product facing layer.

9. The container according to any one of the preceding claims wherein the thickness of the inner product facing layer is from 5 to 50% of the total thickness of the multilayer structure.

10. The container according to any one of the preceding claims wherein the inner product facing layer has a viscosity ratio (0.1/100) of equal to or less than 20, measured with a method as described herein.

11. A container blow molded from a multilayer structure which comprises:

an inner product facing layer which comprises an ethylene-based polymer having a density equal to or less than 0.940 g/cc, measured according to ASTM D792, a crystallinity of equal to or less than 62% measured with a method as described herein , and viscosity ratio (0.1/100) equal to or less than 20 measured with a method as described herein
wherein the inner product facing layer has a small scale root mean square roughness of equal to or less than 40 nm, measured with a method as described herein.

**Patentansprüche**

1. Ein Behälter, der aus einer mehrschichtigen Struktur blasgeformt ist, beinhaltend:

eine einem Produkt zugewandte innere Schicht, beinhaltend ein Polymer auf Ethylenbasis mit einer Dichte von gleich oder weniger als 0,940 g/cm$^3$, gemessen gemäß ASTM D792, einer Kristallinität von gleich oder weniger als 62 %, gemessen mit einem wie hier beschriebenen Verfahren, und einem Mz/Mn-Verhältnis von gleich oder weniger als 100, gemessen mit einem wie hier beschriebenen Verfahren;
wobei die einem Produkt zugewandte innere Schicht einen quadratischen Mittelrauwert im kleinen Maßstab von gleich oder weniger als 40 nm aufweist, gemessen mit einem wie hier beschriebenen Verfahren.

2. Behälter gemäß Anspruch 1, wobei die einem Produkt zugewandte innere Schicht einen quadratischen Mittelrauwert im kleinen Maßstab von gleich oder weniger als 30 nm aufweist.

3. Behälter gemäß einem der vorhergehenden Ansprüche, wobei die einem Produkt zugewandte innere Schicht einen quadratischen Mittelrauwert im kleinen Maßstab von gleich oder weniger als 25 nm aufweist.

4. Behälter gemäß einem der vorhergehenden Ansprüche, wobei das Polymer auf Ethylenbasis eine Dichte von gleich oder weniger als 0,930 g/cm$^3$ aufweist.

**5.** Behälter gemäß einem der vorhergehenden Ansprüche, wobei das Polymer auf Ethylenbasis eine Dichte von 0,915 bis 0,930 g/cm$^3$ aufweist.

**6.** Behälter gemäß einem der vorhergehenden Ansprüche, wobei das Polymer auf Ethylenbasis eine Kristallinität von gleich oder weniger als 56 % aufweist.

**7.** Behälter gemäß einem der vorhergehenden Ansprüche, wobei die einem Produkt zugewandte innere Schicht mit einer äußeren Schicht aus Polymer auf Olefinbasis, die aus einem Polymer auf Olefinbasis mit einer Dichte von mehr als 0,950 g/cm$^3$ geformt ist, koextrudiert wird.

**8.** Behälter gemäß einem der vorhergehenden Ansprüche, wobei die einem Produkt zugewandte innere Schicht mit einer Kernschicht aus Polymer auf Olefinbasis, die aus einem Polymer auf Olefinbasis mit einer Dichte von mehr als 0,950 g/cm$^3$ geformt ist, koextrudiert wird, wobei die Kernschicht neben der einem Produkt zugewandten inneren Schicht liegt.

**9.** Behälter gemäß einem der vorhergehenden Ansprüche, wobei die Dicke der einem Produkt zugewandten inneren Schicht 5 bis 50 % der Gesamtdicke der mehrschichtigen Struktur beträgt.

**10.** Behälter gemäß einem der vorhergehenden Ansprüche, wobei die einem Produkt zugewandte innere Schicht ein Viskositätsverhältnis (0,1/100) von gleich oder weniger als 20 aufweist, gemessen mit einem wie hier beschriebenen Verfahren.

**11.** Ein Behälter, der aus einer mehrschichtigen Struktur blasgeformt ist, beinhaltend:

eine einem Produkt zugewandte innere Schicht, beinhaltend ein Polymer auf Ethylenbasis mit einer Dichte von gleich oder weniger als 0,940 g/cm$^3$, gemessen gemäß ASTM D792, einer Kristallinität von gleich oder weniger als 62 %, gemessen mit einem wie hier beschriebenen Verfahren, und einem Viskositätsverhältnis (0,1/100) von gleich oder weniger als 20, gemessen mit einem wie hier beschriebenen Verfahren; wobei die einem Produkt zugewandte innere Schicht einen quadratischen Mittelrauwert im kleinen Maßstab von gleich oder weniger als 40 nm aufweist, gemessen mit einem wie hier beschriebenen Verfahren.


## Revendications

**1.** Un contenant moulé par soufflage à partir d'une structure multicouche qui comprend :

une couche faisant face au produit interne qui comprend un polymère à base d'éthylène ayant une masse volumique égale ou inférieure à 0,940 g/cm$^3$, mesurée selon l'ASTM D792, une cristallinité égale ou inférieure à 62 %, mesurée avec une méthode telle que décrite ici, et un rapport Mz/Mn égal ou inférieur à 100, mesuré avec une méthode telle que décrite ici ; dans lequel la couche faisant face au produit interne a une rugosité moyenne quadratique à petite échelle égale ou inférieure à 40 nm, mesurée avec une méthode telle que décrite ici.

**2.** Le contenant selon la revendication 1, dans lequel la couche faisant face au produit interne a une rugosité moyenne quadratique à petite échelle égale ou inférieure à 30 nm.

**3.** Le contenant selon n'importe laquelle des revendications précédentes dans lequel la couche faisant face au produit interne a une rugosité moyenne quadratique à petite échelle égale ou inférieure à 25 nm.

**4.** Le contenant selon n'importe laquelle des revendications précédentes, dans lequel le polymère à base d'éthylène a une masse volumique égale ou inférieure à 0,930 g/cm$^3$.

**5.** Le contenant selon n'importe laquelle des revendications précédentes, dans lequel le polymère à base d'éthylène a une masse volumique allant de 0,915 à 0,930 g/cm$^3$.

**6.** Le contenant selon n'importe laquelle des revendications précédentes dans lequel le polymère à base d'éthylène a une cristallinité égale ou inférieure à 56 %.

7. Le contenant selon n'importe laquelle des revendications précédentes dans lequel la couche faisant face au produit interne est co-extrudée avec une couche externe en polymère à base d'oléfine formée à partir d'un polymère à base d'oléfine ayant une masse volumique supérieure à 0,950 g/cm$^3$.

8. Le contenant selon n'importe laquelle des revendications précédentes dans lequel la couche faisant face au produit interne est co-extrudée avec une couche de cœur en polymère à base d'oléfine formée à partir d'un polymère à base d'oléfine ayant une masse volumique supérieure à 0,950 g/cm$^3$, la couche de cœur étant adjacente à la couche faisant face au produit interne.

9. Le contenant selon n'importe laquelle des revendications précédentes dans lequel l'épaisseur de la couche faisant face au produit interne fait de 5 à 50 % de l'épaisseur totale de la structure multicouche.

10. Le contenant selon n'importe laquelle des revendications précédentes dans lequel la couche faisant face au produit interne a un rapport de viscosité (0,1/100) égal ou inférieur à 20, mesuré avec une méthode telle que décrite ici.

11. Un contenant moulé par soufflage à partir d'une structure multicouche qui comprend :

une couche faisant face au produit interne qui comprend un polymère à base d'éthylène ayant une masse volumique égale ou inférieure à 0,940 g/cm$^3$, mesurée selon l'ASTM D792, une cristallinité égale ou inférieure à 62 %, mesurée avec une méthode telle que décrite ici, et un rapport de viscosité (0,1/100) égal ou inférieur à 20, mesuré avec une méthode telle que décrite ici ;
dans lequel la couche faisant face au produit interne a une rugosité moyenne quadratique à petite échelle égale ou inférieure à 40 nm, mesurée avec une méthode telle que décrite ici.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014010534 A
- US 5272236 A

- US 5278272 A

**Non-patent literature cited in the description**

- **WILLIAMS ; WARD.** Polym. Let. *J. Polym. Sci.,* 1968, vol. 6, 621